(19) Europäisches Patentamt
European Patent Office
Office européen des brevets

(11) EP 1 678 099 B1

(12) **FASCICULE DE BREVET EUROPEEN**

(45) Date de publication et mention de la délivrance du brevet:
**13.02.2008 Bulletin 2008/07**

(21) Numéro de dépôt: **04805772.3**

(22) Date de dépôt: **22.10.2004**

(51) Int Cl.:
***C04B 28/06*** (2006.01) ***C04B 24/32*** (2006.01)
***C04B 24/24*** (2006.01) ***C04B 28/14*** (2006.01)

(86) Numéro de dépôt international:
**PCT/FR2004/050529**

(87) Numéro de publication internationale:
**WO 2005/040062 (06.05.2005 Gazette 2005/18)**

(54) **MORTIER DENSE A BASE DE LIANT ETTRINGITIQUE BINAIRE, COMPRENANT AU MOINS UN POLYMERE PEIGNE DE POLY(OXYDE D ALKYLENE) ET AU MOINS UNE RESINE ORGANIQUE STRUCTURANTE**

DICHTER MÖRTEL AUF BASIS VON BINÄREM ETTRINGIT-BINDEMITTEL, ENTHALTEND MINDESTENS EIN POLY(ALKYLENOXID)-KAMMPOLYMER UND MINDESTENS EIN STRUKTURIERENDES ORGANISCHES HARZ

DENSE MORTAR BASED ON BINARY ETTRINGITE BINDER, COMPRISING AT LEAST ONE POLY (ALKYLENE OXIDE) COMB POLYMER AND AT LEAST ONE STRUCTURING ORGANIC RESIN

(84) Etats contractants désignés:
**AT BE BG CH CY CZ DE DK EE ES FI FR GB GR HU IE IT LI LU MC NL PL PT RO SE SI SK TR**
Etats d'extension désignés:
**HR**

(30) Priorité: **23.10.2003 FR 0350728**

(43) Date de publication de la demande:
**12.07.2006 Bulletin 2006/28**

(73) Titulaire: **KERNEOS**
**92200 Neuilly-sur-Seine Cedex (FR)**

(72) Inventeurs:
- **AMATHIEU, Loris**
**F-69720 Saint-Laurent-de-Mure (FR)**
- **TOUZO, Bruno**
**F-69008 Lyon (FR)**
- **RAYNAUD, Lionel**
**F-38630 Corbelin (FR)**
- **GAUTHIER, Dina**
**F-01120 Nievroz (FR)**

(74) Mandataire: **Catherine, Alain et al**
**Cabinet Harlé & Phélip**
**7, rue de Madrid**
**75008 Paris (FR)**

(56) Documents cités:
**WO-A-01/28955**
**DE-A- 3 218 446**
**DE-A- 19 808 314**
**FR-A- 2 246 509**
**US-A- 4 350 533**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 678 099 B1

## Description

La présente invention concerne un mortier dense à base de liant ettringitique, et comprenant au moins un polymère peigne de poly(oxyde d'alkylène) (PCP), le mortier dense présentant de préférence un rapport pondéral eau/solides inférieur à 0,5, ledit liant comprenant un composé minéral d'aluminates de calcium et du sulfate de calcium.

Par liant ettringitique, on entend un liant hydraulique dont les composants, lors de l'hydratation dans les conditions normales d'utilisation, donnent comme hydrate principal l'ettringite, qui est un trisulphoaluminate de calcium répondant à la formule $3CaO,Al_2O_3.3CaSO_4.32H_2O$. Par solides, on entend l'ensemble des constituants secs du mortier.

De préférence, le mortier dense selon l'invention est obtenu par gâchage avec de l'eau dans une quantité telle que le rapport pondéral eau/solides soit inférieur à 0,5.

L'invention concerne enfin l'utilisation d'un polymère peigne de poly(oxyde d'alkylène) (PCP) pour la formulation d'un mortier tel que défini ci-dessus.

Le liant ettringitique comprenant un composé minéral d'aluminates de calcium et du sulfate de calcium est destiné à être utilisé dans des mortiers et bétons de la construction pour lesquels une remise en service rapide de l'ouvrage est attendue. En particulier, il permet de constituer des produits de ré paration et de préparation des sols tels que par exemple les chapes, les enduits de lissage, les colles carrelage.

La remise en service rapide d'ouvrages impose d'atteindre, selon les applications, un niveau de résistances mécaniques minimum à une échéance donnée, et / ou un délai de recouvrement défini par l'humidité résiduelle dans le matériau. Les produits à remise en service rapide sont classiquement constitués à partir de liant dont l'hydratation conduit à la formation d'ettringite.

Dans l'application enduit de lissage par exemple, selon les spécifications du Centre Scientifique et Technique du Bâtiment (« Produits et systèmes de préparation de sols intérieurs pour la pose de revêtements de sols minces » - Guide technique pour l'avis technique et le classement P. Cahiers du CSTB, n° 2893 - Livraison 370 de juin 1996), les produits doivent satisfaire à la fois des critères de performances mécaniques, de performances d'adhérence, et des critères d'aptitude à l'emploi (homogénéité de la pâte, fluidité (diamètre d'étalement de la pâte préalablement versée dans un anneau de 30 mm de hauteur et 50 mm de diamètre) et temps de gélification).

Outre les valeurs imposées par le CSTB, les enduits de lissage rapides doivent satisfaire au moins les critères suivants dans des conditions normales de température et d'hygrométrie :

- Etalement de 150 mm aux échéances 7 et 20 min,
- Résistances mécaniques en compression supérieures à 4 MPa à 4h00,
- Délai de recouvrement de 24h (3% d'humidité résiduelle dans le matériau pour des épaisseurs d'application inférieures à 10 mm) ;
- Résistances mécaniques en compression supérieures à 25 MPa à 28 jours.

La réaction chimique de formation de l'ettringite est la suivante :

$$6Ca^{2+} + 2Al(OH)_4^- + 3SO_4^{2-} + 4OH^- + 26H_2O \rightarrow$$

$$3CaOAl_2O_3.3CaSO_4.32H_2O$$

Le produit de solubilité de l'ettringite à l'équilibre est : $K_{ett} = 4.9 \times 10^{-44}$. La vitesse de formation de l'ettringite (taux de nucléation et croissance des cristaux d'ettringite) est dépendante de plusieurs paramètres, dont le coefficient de sursaturation $\beta$, relié à l'énergie disponible à la formation des nuclei :

$$\beta = (a_{Ca2+})^6 * (a_{Al(OH)4-})^2 * (a_{SO42--})^3 * (a_{OH-})^4 / K_{ett}$$

où $a_i$ représente les activités des ions i.

L'ettringite peut être obtenue par l'hydratation de compositions comprenant des aluminates de calcium et une source de sulfate, et éventuellement du ciment Portland et/ou de la chaux qui apportent en solution les ions nécessaires à la réalisation de cette réaction chimique. Les aluminates de calcium sont des combinaisons d'oxyde d'aluminium $Al_2O_3$, représenté par A dans la notation cimentière, et d'oxyde de calcium CaO, représenté par C dans cette même notation cimentière, ces oxydes étant cristallisés notamment sous la forme C3A, C12A7 et CA.

En pratique aujourd'hui les formulations de mortiers à durcissement et séchage rapide comprennent une association d'aluminates de calcium, de sulfate de calcium et de ciment Portland, avec des proportions de chacun des constituants délicates à définir car il faut pouvoir maîtriser l'hydratation sous forme d'ettringite, de manière à réaliser le

meilleur compromis entre la quantité d'ettringite formée qui garantit la capacité de séchage du produit (quantité d'eau de gâchage cristallisée sous forme d'hydrates importante) et la morphologie de cette ettringite, laquelle, pour une densité de cristaux donnée, garantit le niveau de résistances mécaniques et le contrôle des variations dimensionnelles tout au long du processus de durcissement jusqu'à long terme. Ce compromis est d'autant plus difficile à réaliser que les niveaux de rapidité d'acquisition des résistances que l'on souhaite atteindre doivent être compatibles avec les caractéristiques de mise en oeuvre attendue, notamment le temps de maintien de l'ouvrabilité.

Ce compromis n'est pas obtenu de manière satisfaisante dans les mortiers de l'art antérieur. Ainsi, par exemple, le brevet US 4,350,533 décrit des compositions de ciments ettringitiques à base de ciments d'aluminates de calcium, de sulfate de calcium, notamment sous forme de gypse, et éventuellement de chaux amenée de manière séparée et de ciment Portland. Mais la cinétique de développement des résistances mécaniques est très inférieure à celle recherchée dans le cadre de la présente invention.

Il est connu, pour les applications dites de « Mine Packing » (où l'on cherche à combler les cavités qui apparaissent dans les ouvrages souterrains), d'utiliser des mélanges ettringitiques d'aluminates de calcium et de sulfate de calcium. Mais les contraintes du système sont très différentes des applications « mortiers denses » de l'invention : le produit doit être pompable, faire prise rapidement, mais avec, un rapport eau/solides de l'ordre de 0,5 (l'important dans cette application étant de faire beaucoup de volume), les résistances mécaniques en compression à 24 heures ne dépassent pas 5 MPa. De même, la durabilité du système n'est pas un critère clé, pas plus que les variations dimensionnelles. Les contraintes existantes dans les applications « mortiers denses » sont telles qu'il n'est pas possible d'utiliser ces solutions « mine packing » directement, elles doivent être reformulées et adaptées aux contraintes des systèmes denses.

L'invention a donc pour but de remédier aux inconvénients de l'état de la technique en proposant un mortier dense à base de liant ettringitique comprenant du sulfate de calcium et un composé minéral d'aluminates de calcium, permettant de réaliser dans des milieux denses le meilleur compromis possible entre le temps de maintien de l'ouvrabilité et la cinétique d'acquisition des résistances mécaniques.

L'invention a également pour but de mettre au point des mortiers dont les propriétés mécaniques sont améliorées. Ce but est atteint par l'utilisation de polymères de nature et dosages particuliers en association avec un liant ettringitique.

La formation de l'ettringite résulte directement des vitesses de dissolution relatives des constituants solubles qui détermineront les proportions entre les ions calcium, aluminium et sulfate dans la solution. La concentration en ion calcium agit au premier ordre sur la cinétique de formation de l'ettringite ; lorsqu'elle est élevée la formation d'ettringite peut être extrêmement rapide, voire flash et donc se produire instantanément autour des phases anhydres contenant les autres ions nécessaires, c'est-à-dire les sulfates ou les aluminates selon les cas. Ce phénomène de blocage des interfaces réactionnelles est particulièrement critique en milieu dense, et lorsqu'il y a de gros écarts entre les vitesses de libération des ions calcium des différentes espèces solubles et/ou de gros écarts entre les vitesses de libération des ions calcium, aluminium et sulfates. Afin d'obtenir la performance souhaitée pour les mortiers, et notamment pour les mortiers denses, il faut éviter la formation précoce et très rapide d'ettringite autour des grains les moins solubles, qui empêche alors le déroulement normal de l'hydratation et conduit à un mortier dense ne répondant pas au cahier des charges, notamment en terme de performances mécaniques à court terme.

Ce phénomène de blocage des interfaces réactionnelles est l'une des raisons expliquant que les solutions utilisées en milieu dilué ne sont pas transposables aux milieux denses : en effet, en milieu dilué, la dissolution des différentes phases solubles est grandement facilitée, ce qui diminue la probabilité de formation de l'ettringite au contact des grains.

De la même façon, les liants ettringitiques classiques, comprenant du ciment Portland et/ou de la chaux, du sulfate de calcium et des ciments alumineux, ne donnent pas les meilleurs rendements de cinétique de durcissement. En effet, le ciment Portland comprend des sources de calcium de nature minéralogique et de solubilité très différentes, tels que la chaux libre, le C3S, le C2S, des sulfates de calcium, ainsi que des espèces mineures, tels que des sulfates alcalins, extrêmement solubles qui modifient significativement la solubilisation des phases contenant du calcium. Ceci ne permet donc pas un apport de calcium constant tout au long du processus d'hydratation.

En ce qui concerne la chaux, sa dissolution trop rapide limite la solubilisation des phases contenant des aluminates. Un excès de chaux a aussi des conséquences fortes sur les variations dimensionnelles (très forte expansion) et sur la morphologie de l'ettringite formée, qui devient plus massive, donc moins structurante (les résistances mécaniques sont diminuées). Son taux d'introduction dans le mélange est donc limité, ce qui limite d'autant le rendement de fabrication de l'ettringite pour une teneur en sulfate ou en aluminate donnée, et donc la performance de durcissement et de séchage rapide.

De même, un excès de sulfate de calcium par rapport aux phases contenant des aluminates de calcium conduit aux mêmes effets que la chaux, c'est-à-dire à des résistances mécaniques moindres et à de fortes variations dimensionnelles. Cela s'explique en partie par le fait que la solubilisation des sulfates de calcium libère des quantités importantes de calcium dans la phase aqueuse. Aussi, des compositions comprenant les phases aluminates de calcium et sulfate

de calcium dans les proportions stoechiométriques (rapport molaire sulfate de calcium/oxyde d'aluminium A égal à 3) ne peuvent permettre la réalisation de mortiers denses avec de bonnes propriétés de durcissement et des variations dimensionnelles maîtrisées. La maîtrise de l'hydratation du mortier passe donc tout d'abord par le contrôle du taux d'apport de calcium relativement aux autres espèces ioniques, et notamment l'aluminium.
Enfin, il est bien connu que l'ensemble des constituants organiques d'une composition de mortier aura aussi une influence directe, plus ou moins prononcée, sur les cinétiques de dissolution des différentes phases minérales, et par là même sur le rendement de formation de l'ettringite, la morphologie des cristaux formés et la microstructure du matériau final.

L'invention concerne donc un mortier dense comprenant :

(i) un liant ettringitique comprenant des sulfates de calcium et un composé minéral d'aluminates de calcium, le composé minéral d'aluminates de calcium comprenant des oxydes de calcium C et d'aluminium A, solubles et combinés en une ou plusieurs phases minéralogiques cristallisées et/ou amorphes, dans des proportions telles que :

- le rapport molaire C/A utile du composé minéral d'aluminates de calcium est compris entre 1,2 et 2,7 ;
- la somme en poids des phases (C+A) utiles représente au moins 30% du poids total du composé minéral,

(ii) au moins un polymère peigne de poly(oxyde d'alkylène) (PCP) et,
(iii) au moins une résine organique structurante,

ladite résine organique structurante représentant moins de 2% en poids du mortier.

L'invention sera mieux comprise à la lumière des figures suivantes qui représentent :

Figures 1 et 2: La dureté de surface à sec et après humidification de mortiers selon l'invention et de mortiers connus.
Figure 3 : La résistance à l'usure de mortiers selon l'invention et de mortiers connus.
Figures 4 et 5: L'adhérence à sec et après immersion 24 heures dans l'eau de mortiers selon l'invention et de mortiers connus.

L'invention concerne un mortier dense comprenant :

(i) un liant ettringitique comprenant des sulfates de calcium et un composé minéral d'aluminates de calcium,
(ii) au moins un polymère peigne de poly(oxyde d'alkylène) (PCP) et,
(iii) au moins une résine organique structurante,

ladite résine organique structurante représentant moins de 2% en poids du mortier.

Un avantage de l'invention est de permettre une remise en service rapide des ouvrages, tout en conservant une ouvrabilité équivalente à celle obtenue avec les mortiers de l'art antérieur. Pour des formulations contenant des liants ayant une même teneur en alumine, un même taux de liant, et une finesse Blaine de l'aluminate de calcium identique, l'acquisition des résistances mécaniques est ainsi beaucoup plus rapide et le temps de remise en circulation piétonne est deux fois plus court avec les mortiers réalisés avec le liant selon l'invention qu'avec les mortiers réalisés avec un liant selon l'art antérieur.

L'association du liant avec au moins un polymère peigne poly(oxyde d'alkylène) (PCP) permet d'obtenir des mortiers dont les performances au niveau de la dureté de surface à sec ou après humidification, de la résistance à l'usure, et de l'adhérence à sec ou après immersion dans l'eau sont nettement supérieures à celles obtenues avec un mortier à base de caséine, comme cela est illustré respectivement sur les figures 1, 2, 3 ,4, et 5

Avec les associations liant ettringitique - PCP selon l'invention, les propriétés améliorées du mortier durci citées ci-dessus sont obtenues avec des teneurs en poids de polymère structurant dans le mortier sec limitées à moins de 2%.

Le mortier selon l'invention comprend de préférence, au moins 0,3% de résine organique structurante, par rapport au poids du mortier.

De préférence, le mortier selon l'invention comprend 0,05 % à 0,3 % de polymère peigne de poly(oxyde d'alkylène) (PCP), et de manière tout à fait préférée, 0,1 % à 0,2 % de polymère peigne de poly (oxyde d'alkylène) (PCP), par rapport au poids du mortier.

De préférence, le mortier dense comprend une résine organique structurante représentant 1% en poids du mortier ou moins. Comme cela sera exposé dans les exemples, la quantité de résine structurante peut être limitée à 1% ou même 0,5%. Toutefois une teneur supérieure à 0,3% est préconisée.

L'invention fournit un mortier présentant de préférence au moment du gâchage avec l'eau un rapport pondéral eau/solides inférieur à 0,5. Le liant ettringitique comprend des sulfates de calcium et un composé minéral d'aluminates de calcium, les aluminates et les sulfates et leur concentration dans le liant étant tels que les ions respectivement calcium et aluminium sont libérés dans des proportions optimales simultanément et régulièrement tout au long du processus

d'hydratation, conduisant à la formation d'ettringite sans le blocage précoce aux interfaces grains anhydres-eau, qui gêne la dissolution des grains anhydres et diminue par conséquent le rendement de formation de l'ettringite.

Par oxydes C et A utiles, on entend les oxydes C et A qui, lorsqu'ils sont mis en solution, en mélange avec les autres constituants choisis de la composition du mortier, parmi lesquels le sulfate de calcium, donnent un coefficient de sursaturation $\beta>1$.

Par phase utile, on entend une phase qui libère des oxydes C et A utiles.

Ainsi, les phases C2AS, les ferrites, ne sont pas des phases utiles (on les appelle "phases inertes"). A contrario, les phases C12A7, C3A, les verres, C4A3$ (où $ représente SO3 en notation cimentière), CA, par exemple, sont des phases utiles.

Le rapport molaire C/A utile du composé minéral d'aluminates de calcium est donc le rapport molaire de la totalité des oxydes C et A du composé minéral d'aluminates de calcium qui se trouvent dans les phases utiles. De même, la somme en poids des phases (C+A) utiles est la somme en poids des phases comprenant les oxydes C et A et qui sont des phases utiles.

L'apport des ions calcium et aluminium en solution se fait ainsi tout au long de la réaction dans les proportions déterminées par le rapport molaire C/A utile du composé minéral d'aluminates de calcium.

La résine organique structurante est de préférence choisie parmi les copolymères d'acétate de vinyle (EVA), versatates de vinyle et d'éthylène, disponibles par exemple auprès des sociétés Wacker ou Elotex, et les alcools polyvinyliques (PVA), les polymères en dispersion solide-liquide choisis parmi les dispersions styrène-butadiène, styrène acryliques, acryliques, acétates de vinyle, et versatate de vinyle et d'éthylène, disponibles par exemple auprès de la société Rohm & Haas.

De préférence, par « polymère peigne », on entend un polymère constitué d'une chaîne principale présentant de multiples points de ramification dont chacun est le point de départ d'une chaîne latérale linéaire ou ramifiée. En particulier, par polymère peigne de poly(oxyde d'alkylène) (PCP) on entend un ou plusieurs polymères de synthèse choisis parmi les copolymères d'acides carboxyliques et d'ester carboxyliques de poly(Alkylène Glycol), les copolymères d'acides carboxylique et d'amide de poly(AlkylèneGlycol), les copolymères d'acides carboxyliques et d'imide de poly (AlkylèneGlycol), les copolymères d'acides carboxyliques et d'ethers vinyliques de poly(alkylène glycol), neutralisés ou non neutralisés, et leurs mélanges.

Plus précisément, il s'agit de copolymères incluant dans leur structure les unités A, B, C, D, E, F, G, H, I aux fractions molaires respectives a, b, c, d, e, f, g, h, i, ces paramètres ayant les significations suivantes :

A représente :

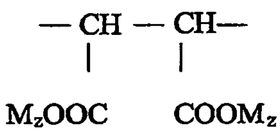

B représente :

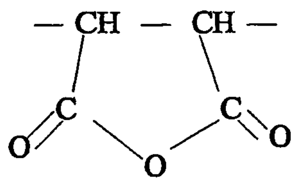

C représente :

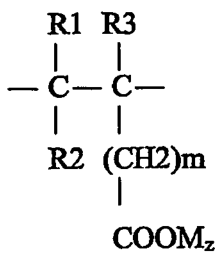

D représente :

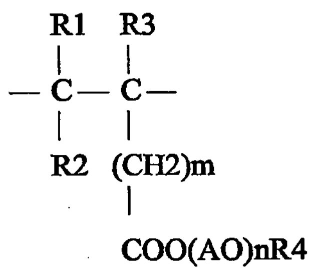

E représente :

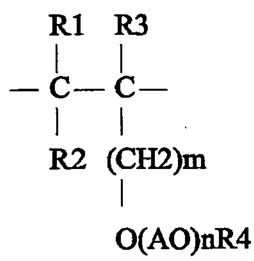

F représente :

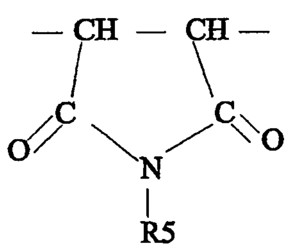

G représente :

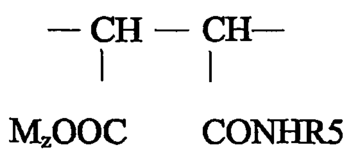

H représente :

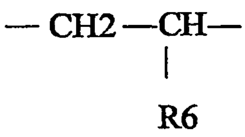

I représente :

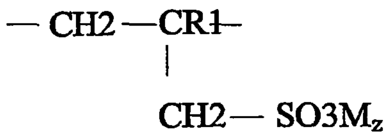

Les symboles désignent, indépendamment les uns des autres, au sein d'une même structure, et d'une structure à l'autre :

- M représente : H, un ion alcalin, un ion alcalino-terreux, un ion NH4+, un ion ammonium primaire, secondaire ou tertiaire.
- R1 et R2 représentent indépendamment l'un de l'autre : H ou CH3,
- R3 représente : H, ou un groupement hydrocarboné aliphatique comprenant de 1 à 20 atomes de carbone
- R4 représente : H, un groupement hydrocarboné aliphatique comprenant de 1 à 20 atomes de carbone, un cycle hydrocarboné aliphatique comprenant de 5 à 8 atomes de carbone ou un groupement aromatique ou aryle substitué comprenant de 6 à 14 atomes de carbone.
- R5 représente : H, un groupement hydrocarboné aliphatique, substitué par un groupe hydroxyle avec de 1 à 20 atomes de Carbone, ou poly(oxyde d'alkylènes) -(CxH2xO)n-R4, avec x compris entre 2 et 4 et n compris entre 0 et 200.
- R6 représente : H, CH3, un groupement alkyl de C2 à C6, un groupement Phenyl, phenyl carboxylé, phenyl sulfonaté
- m représente : un entier de 0 à 2
- z représente : 0.5 ou 1
- n vaut de 0 à 200 (moyenne en nombre)
- AO = CxH2xO représente un groupement oxyde d'alkylène comprenant de x = 2 à x = 4 atomes de carbone,

Avec : a et/ou b et/ou c compris entre 0.05 et 0.9 ; d et/ou e et/ou f compris entre 0.05et0.9; g et/ou h compris entre 0 et 0.9 ; i compris entre 0 et 0.9.

De préférence, on choisira des PCP dans lesquels :

R1, R2 représentent : H,
R3 représente : H, ou CH3,
R4 représente: CH3,
R5 représente : C2H4O (soit x = 2),
R6 : représente un groupe Phényle,
m vaut 0,
AO représente : $C_2H_4O$ (soit x = 2),
n est compris entre 16 et 115 , et (2a + 2b + c + g) est compris entre 0.70 et 0.95, (d + e + h) est compris entre 0.05 et 0.7, f=0, i=0.

Alternativement, on choisira des PCP dans lesquels :

M représente : H, un ion alcalin, un ion NH4+, un ion ammonium primaire, secondaire ou tertiaire,
R1, R2 représentent : H,
R3 représente : H, CH3,
R4 représente : CH3,
R5 représente : C2H40 (x=2),
R6 représente : un groupe Phényle,
m vaut : 0,
AO représente : C2H4O (soit x = 2),

n est compris entre 16 à 50, et
(2a + 2b + c + g) est compris entre 0.7 et 0.95, (d + e + h) est compris entre 0.05 et 0.7, f=0, i=0, et la masse moléculaire du polymère est comprise entre 5000 g/mole et 150000 g/mole.

Alternativement, on choisira des PCP dans lesquels : M représente : H, un ion alcalin, un ion NH4+, un ion ammonium primaire, secondaire ou tertiaire,

R1, R2 représentent : H,
R3 représente : H, ou CH3,
R4 représente: CH3,
R5 représente: C2H4O (soit x=2),
AO représente: C2H4O (soit x=2),
m vaut 0,
n est compris entre 16 et 50,
et a = 0, b = 0, c est compris entre 0.72 et 0.85, (d+e) est compris entre 0.15 et 0.28, f=0, g=0, h=0, i=0, et la masse moléculaire du polymère est comprise entre 5000 g/mole et 70000 g/mole, et de préférence entre 5000 et 40000 g/mole.

Alternativement, on choisira des PCP dans lesquels :

M représente : H, un ion alcalin, un ion NH4+, un ion ammonium primaire, secondaire ou tertiaire,
R1, R2 représentent : H,
R3 représente : CH3,
R4 représente : CH3,
R5 représente : C2H4O (soit x=2),
AO représente : C2H4O (soit x=2),
m vaut 0,
n est compris entre 16 et 50,
et a = 0, b = 0, c est compris entre 0.72 et 0.85, d est compris entre 0.15 et 0.28, e = 0, f=0, g=0, h=0, i=0, et la masse moléculaire du polymère est comprise entre 5000 g/mole et 70000 g/mole, et de préférence entre 5000 et 40000 g/mole.

L'utilisation d'un PCP dans le mortier plutôt que de la caséine, utilisée habituellement dans ces compositions permet d'obtenir de meilleures performances au niveau de la dureté, comme cela est illustré par les exemples 1, 2 et 3 de compositions selon l'invention et les exemples comparatifs 4 à 7. Le recours au PCP, en remplacement de la caséine, permet également avec un choix particulier de polymère structurant d'améliorer les performances du mortier dans le domaine de la dureté de surface à sec et après humidification, de la résistance à l'usure, et de l'adhérence à sec et après immersion dans l'eau, comme cela est décrit dans les exemples et dans les commentaires des figures 1 à 5.

Sans vouloir être liés par une théorie particulière, les inventeurs pensent que les meilleures performances sont obtenues grâce à la microstructure du matériau obtenu : le réseau d'hydrates très dense résultant de l'hydratation du liant ettringitique défini en présence du PCP et en l'absence d'un apport complémentaire de chaux dans les compositions de l'invention, et la distribution de taille très homogène de pores fins réduisent la quantité de polymère structurant nécessaire au renfort mécanique du matériau durci.

De préférence, la résine organique structurante comprend au moins un polymère choisi parmi le poly(Acétate de vinyle), les copolymères d'acétate de vinyle et d'éthylène en poudre (EVA), les copolymères formés par copolymérisation de 2 ou plus des monomères choisis parmi l'éthylène, l'acétate de Vinyle, les esters vinyliques d'acides versatiques, le chlorure de vinyle, le laurate de vinyle, le styrène, le butadiène, l'acrylate d'alkyle, le méthacrylate d'alkyle, et l'anhydride maléïque et ses dérivés, et de préférence,

- dont la température de transition vitreuse Tg est comprise entre - 20°C et + 35°C et de préférence entre 0°C et 20°C,
- dont la température minimale de formation du film MFFT est comprise entre 0 et 35°C et de préférence entre 0°C et 20°C
- pouvant présenter sur leur surface les éléments habituels de formulation des poudres polymériques redispersables, en particulier un colloide protecteur de préférence constitué d'un alcool polyvinylique et/ou d'un éther de cellulose, et
- dont le diamètre moyen des particules élémentaires après redispersion dans l'eau est inférieur à 100µm, et de préférence inférieur à 10 µm.

Un mortier tout à fait préféré comprend 0,2% en poids du mortier d'au moins un polymère peigne de poly(oxyde

d'alkylène) (PCP) et 1% en poids du mortier, d'au moins un copolymère d'acétate de vinyle et d'éthylène en poudre (EVA).

Ce type de liant, particulièrement bien adapté à la réalisation d'enduits de lissage, est décrit plus en détail dans les exemples de réalisation 1, 2 et 3.

Alternativement, la résine organique structurante comprend au moins un alcool polyvinylique (PVA) éventuellement modifié par inclusion de groupements acides carboxyliques dans sa structure.

Ce type de mortier comprenant au moins un alcool polyvinylique (PVA) est bien adapté à la réalisation d'enduits de surface, et est plus performant en ce qui concerne les propriétés de dureté de surface que les mortiers de l'art antérieur comprenant des poudres redispersables (EVA) et de la caséine associée à de la chaux, comme cela ressortira plus clairement à la lecture des exemples.

Par alcool polyvinylique on entend les structures moléculaires schématisées ci dessous,

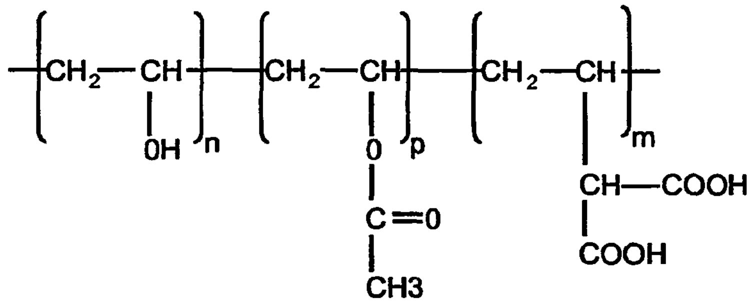

c'est à dire les alcools polyvinyliques classiques (m = 0) ainsi que ceux pouvant éventuellement être modifiés par inclusion de groupements acides carboxyliques dans leur structure (m différent de 0), dont un exemple possible est donné dans le schéma ci-dessus.

L'alcool polyvinylique se caractérise par son taux d'hydrolyse (n / ( n + p) et sa masse moléculaire , cette dernière pouvant être mesurée indirectement par une mesure de viscosité à 20°C d'une solution à 4% (massique) de PVA dans l'eau, exprimée en mPa.s et déterminée selon les règles de l'art.

De préférence les alcools polyvinyliques selon l'invention ont un taux d'hydrolyse entre 70% et 98% et un indice de viscosité entre 3 et 35, de préférence un taux d'hydrolyse entre 70% et 92% et un indice de viscosité entre 3 et 28.

Un mortier dense tout à fait préféré comprend 0,2% en poids du mortier d'au moins un polymère peigne de poly(oxyde d'alkylène) (PCP) et 1% en poids du mortier d'au moins un alcool polyvinylique (PVA).

A cause des réactions d'hydrolyse alcaline les alcools polyvinyliques ne sont utilisables à un dosage élevé (par exemple 1%) que si on n'ajoute pas de chaux supplémentaire dans la composition du liant minéral. Le liant ettringitique autorise donc l'utilisation de cette famille de polymère à ce dosage, ce que ne permettent pas les compositions ettringitiques ternaires Aluminate de calcium / Sulfate de calcium / Chaux selon l'art antérieur.

Des compositions préférées de mortiers comprenant l'association d'un PCP et d'une résine de type PVA sont fournies dans les exemples 8, 9, 10 et 11.

De préférence, le rapport pondéral composé minéral d'aluminates de calcium/sulfate de calcium est compris entre 0,5 et 4, mieux entre 1,5 et 3. De préférence encore , le rapport molaire sulfate de calcium/oxyde d'aluminium A dans le liant ettringitique est compris entre 0,5 et 2.

Selon un mode de réalisation préféré, le rapport molaire C/A utile du composé minéral d'aluminates de calcium dans le liant ettringitique est compris entre 1,3 et 2,5, mieux entre 1,6 et 2.

Par ailleurs, avantageusement, le rapport molaire sulfate de calcium/oxyde d'aluminium A dans le liant ettringitique est compris entre 0,6 et 1,8, de préférence entre 0,8 et 1,7.

Selon un mode de réalisation préféré, le mortier dense comprenant le liant ettringitique présente au moment du gâchage avec l'eau un rapport pondéral eau/solides inférieur à 0,5.

Le mortier selon l'invention permet d'obtenir d'excellents rendements de formation d'ettringite et donc une bonne cinétique de durcissement sans nécessiter, pour la formulation du mortier, de source complémentaire d'ions calcium. Un autre avantage en s'affranchissant de cette source complémentaire de calcium, qui peut être soit de la chaux, soit du ciment Portland, est que l'on obtient des compositions de mortier plus régulières en performance sur les critères importants de l'application, le ciment Portland notamment ayant une teneur très variable en espèces mineures, dont l'impact sur la formation d'ettringite et la microstructure donc les performances du matériau final est déterminant

Ainsi, de préférence, les mortiers comprenant le liant ettringitique selon l'invention ne comprennent pas de ciment Portland ni de chaux hydraulique. Ils peuvent néanmoins tolérer un faible pourcentage de chaux hydraulique et/ou de ciment Portland, dans une limite de 3,5% en poids par rapport au poids total du mortier sec, au profit des performances de durcissement mais au détriment des propriétés rhéologiques et des performances mécaniques finales

Selon un mode de réalisation préféré, la somme en poids des phases (C+A) utiles représente au moins 50% en poids du poids total du composé minéral d'aluminates de calcium.

Le composé minéral d'aluminates de calcium compris dans le liant utilisé pour formuler le mortier peut être obtenu par cuisson de matières riches en oxyde d'aluminium A, dont les bauxites, et de calcaire, dans un four à une température supérieure à 1100°C. Il peut être obtenu sous forme d'un ou plusieurs clinkers fondus ou frittés qui peuvent contenir des phases cristallisées ou des phases amorphes ou résulter d'un mélange de différents composés minéraux comprenant des aluminates de calcium, eux-mêmes obtenus par cuisson ou non. Le four utilisé peut être tout type de four classiquement utilisé pour la formation des clinkers, tel que les fours réverbères, les fours à tunnel, les fours rotatifs ou les fours électriques, à induction ou à arc électrique.

Le composé minéral d'aluminates de calcium peut être sous une phase minéralogique cristallisée choisie parmi CA, C12A7, C3A, C4A3$ ou sous une phase amorphe, ou sous la forme d'un mélange d'au moins une desdites phases minéralogiques cristallisées et d'une phase amorphe. De préférence, le composé minéral comprend au moins 30% en poids de C12A7, de préférence encore au moins 50% en poids de C12A7, mieux de 50% à 85% en poids de C12A7, par rapport au poids total du composé minéral.

Le composé minéral d'aluminates de calcium peut également comprendre au moins une phase minéralogique cristallisée choisie parmi C2A(1-x)Fx, C2S, C2AS, C3S et leurs mélanges, où F et S représentent respectivement $Fe_2O_3$ et $SiO_2$ en notation cimentière, et où x est un entier appartenant à [0 ; 1].

Le composé minéral d'aluminates de calcium peut être broyé et peut alors présenter une surface spécifique Blaine supérieure ou égale à 1500 $cm^2$/g, de préférence comprise entre 2000 et 5000 $cm^2$/g.

Le sulfate de calcium convenant pour le liant peut provenir des anhydrites, du gypse, des semi-hydrates et de leurs mélanges, de préférence du gypse, des semi-hydrates et leurs mélanges.

Le liant comprenant le composé minéral d'aluminates de calcium selon l'invention permet d'obtenir, après ajout de granulats et d'additifs, un mortier sec, puis un mortier dense après ajout d'eau de manière à obtenir un rapport pondéral eau/solides inférieur à 0,5.

Le mortier dense selon l'invention peut comprendre en outre :

- fillers calcaires ou sables siliceux : de 25 à 85% en poids par rapport au poids total du mortier sec,
- chaux et/ou ciment Portland : de 0% à 3,5% en poids par rapport au poids total du mortier sec,
- des additifs complémentaires de rhéologie et/ou des additifs régulateurs de prise.

De préférence, le mortier dense selon l'invention comprend :

- fillers calcaires ou sables siliceux : de 50 à 80% en poids par rapport au poids total du mortier sec,
- chaux et/ou ciment Portland : de 0% à 0,5% en poids par rapport au poids total du mortier sec,
- des additifs complémentaires de rhéologie et/ou des additifs régulateurs de prise.

Les additifs complémentaires de rhéologie ont pour objet d'améliorer la rhéologie initiale du mortier gâché ; ils peuvent être la caséïne ou des polymères hydrosolubles, dont la fonction est de limiter la ségrégation, tels que des éthers de cellulose, mais aussi les gommes welan, les polysaccharides. Ils représentent de préférence de 0,1 à 0,5% du poids total du mortier sec.

Les additifs régulateurs de prise peuvent être des accélérateurs de prise ou des retardateurs de prise. Ils représentent de préférence de 0,1 à 0,5% du poids total du mortier sec. De préférence, on peut utiliser de l'acide tartrique, en combinaison avec du gluconate de sodium comme retardateur de prise.

Le mortier sec selon l'invention permet d'obtenir, par gâchage avec de l'eau, un mortier humide. De préférence, la quantité d'eau est telle que le rapport pondéral eau/solides est inférieur à 0,5.

L'invention a encore pour objet l'utilisation d'un polycarboxylate polyoxyde d'éthylène (PCP) pour la formulation d'un mortier selon l'invention.

L'invention est illustrée et détaillée par les exemples suivants.

Dans tous les exemples, le rapport C/A utile est un rapport molaire ; le pourcentage (C+A) utile est exprimé en poids par rapport au poids total du composé minéral ; le rapport sulfate de calcium/$Al_2O_3$ est un rapport molaire ; la quantité d'eau de gâchage est donnée en pourcentage en poids par rapport au poids total des constituants secs du mortier.

**<u>Exemple 1, 2, 3 - Comparatifs 4, 5, 6, 7</u>**

On réalise des enduits de lissage avec des composés minéraux d'aluminates de calcium et de sulfate de calcium selon l'invention. Les compositions des essais 1 à 6 sont rassemblées dans le tableau 1.

Pour faciliter la comparaison, les compositions en résine et en PCP sont rassemblées dans le tableau 2, et les performances des mortiers de l'art antérieur et des mortiers de l'invention sont données dans le tableau 3. On fait

apparaître dans le tableau 1 la quantité totale, en poids, d'alumine dans le liant.

Tableau 1

| N° Essai | Essais 1 à 11 sauf 7 | Essai 7 |
|---|---|---|
| Composé d'aluminates de calcium (SSB : 2800cm$^2$/g) :<br>- C/A utile<br>- (C+A) utiles (%)<br>- phases majoritaires<br>- quantité (% en poids) | <br>1,77<br>55<br>C12A7<br>20 | <br>1<br>55<br>CA<br>20 |
| Source complémentaire d'ions calcium<br>- nature<br>- quantité (% en poids) | -<br>- | Ciment portland<br>4 |
| % d'alumine total | 8 | 8,1 |
| Sulfate de Calcium (% en poids) | 9 | 7 |
| Durcal 2 (% en poids) | qsp 100* | |
| Durcal 40 ( % en poids) | 18 | |
| Sifraco MA37 ( % en poids ) | 6,9 | |
| Sifraco CV32 ( % en poids ) | 26,5 | |
| Durcal 15 (% en poids) | | Qsp 100* |
| Durcal 130 (% en poids) | | 10 |
| Sifraco NE14 (% en poids) | | 36 |
| Li2CO3 (% en poids) | 0,05 | 0,05 |
| Acide citrique (% en poids) | - | |
| Acide tartrique (% en poids) | 0,07 à 0,18 | 0,07 |
| Ether de cellulose Wolf Walsrode MT 400PFV (% en poids ) | cf. tableau 2 | 0,06 |
| Dehydran 1922 (% en poids) | 0,1 | 0,1 |
| K2SO4 (% en poids) | - | 0,2 |
| Caséine (% en poids) + chaux ( % en poids ) | cf. tableau 2 | 0,5 + 0,4 |
| Gluconate de soude (% en poids) | - | 0,04 |
| Polymère peigne de poly(oxyde d'alkylène) (% en poids ) | cf. tableau 2 | - |
| Polymère structurant (% en poids ) | cf. tableau 2 | 3,5 |

(suite)

| N° Essai | Essais 1 à 11 sauf 7 | Essai 7 |
|---|---|---|
| Eau de gâchage | 24 | 24 |
| *qsp: quantité suffisante pour atteindre 100% avec l'ensemble des constituants sec de ce tableau, tenant compte des teneurs en polymère peigne de poly(oxyde d'alkylène) (PCP) et en polymère structurant.<br>Sulfate de calcium : semi-hydrate à 95% de pureté.<br>Ciment Portland CPA CEM I 52.5 CP2.<br>Durcal 2 : carbonate de calcium commercialisé par OMYA.<br>Durcal 40 : carbonate de calcium commercialisé par OMYA.<br>Durcal 15 : carbonate de calcium commercialisé par OMYA.<br>Durcal 130 : carbonate de calcium commercialisé par OMYA.<br>Sifraco NE 14 : sable siliceux commercialisé par la société Sifraco<br>Sifraco MA 37: sable siliceux commercialisé par la société Sifraco<br>Sifraco CV 32 : sable siliceux commercialisé par la société Sifraco | | |

Les concentrations et caractéristiques des polymères peigne de poly(oxyde d'alkylène) et des polymères structurants sont rassemblées dans les tableaux d'exemples suivants.

**Tableau 2**

| | invention | | | comparatif | | | |
|---|---|---|---|---|---|---|---|
| essai | 1 | 2 | 3 | 4 | 5 | 6 | 7 |
| Résine structurante | EVA | EVA | EVA | EVA | EVA | EVA | EVA |
| Type de résine | RE 523Z | EV 2000 | RE 523Z | RE 523Z | EV 2000 | EV 2000 | RE 523Z |
| Dosage (%) | 1 | 1 | 1,9 | 1 | 1 | 3 | 3,5 |
| Ether de Cellulose (%) | 0,08 | 0,08 | 0,04 | 0,04 | 0,04 | 0,04 | 0,06 |
| PCP | PCP a | PCPa | PCPb | Caséine + chaux | Caséine + chaux | Caséine + chaux | Caséine + chaux |
| Dosage PCP (%) | 0,2 | 0,1 | 0,15 | 0,5 + 0,45 | 0,5 + 0,45 | 0,5 + 0,45 | 0,5 + 0,45 |

EV 2000 est une résine commercialisée par la société Elotex. C'est un copolymère de base Ethylène - Acétate de Vinyle - Versatate de Vinyle de MFFT = 5°C, avec un colloïde protecteur en surface de type alcool de polyvinyle, et de taille moyenne de particules après redispersion comprise entre 0,5 et 8 microns.

RE523Z est une résine commercialisée par la société Wacker. C'est un copolymère d'acétate de vinyle et d'éthylène, de MFFT = 4°C, avec un colloïde protecteur en surface de type alcool de polyvinyle, et de taille moyenne de particules après redispersion comprise entre 0,5 et 8 microns.

PCPa est un polymère peigne de poly(oxyde d'alkylène) défini, en référence aux unités A, B, C, D, E, F, G, H, I, décrites ci-dessus, et dans lesquelles,

R1, R2 représentent : H,
R3 représente : CH3
R4 représente: CH3
R5 représente: C2H4O (x = 2)
m vaut 0
AO = C2H4O (soit x = 2)
n est compris entre 19 et 25

et a = 0, b = 0, c est compris entre 0.72 et 0.78, d est compris entre 0.22 et 0.28, e=0, f=0, g=0, h=0, i=0, et dont la masse moléculaire moyenne est comprise entre 8000 g/mole et 40000 g/mole.

PCPb est un polymère peigne de poly(oxyde d'alkylène) défini en référence aux unités A, B, C, D, E, F, G, H, I, décrites ci-dessus, et dans lesquelles :

R1, R2 représentent : H
R3 représente : CH3
R4 représente: CH3
R5 représente: C2H4O (x = 2)
M vaut 0
AO = C2H4O (soit x = 2)
n est compris entre 40 et 50
et a = 0, b = 0, c est compris entre 0.78 et 0.82, d est compris entre 0.18 et 0.22, e=0, f=0, g=0, h=0, i=0.
et dont la masse moléculaire moyenne est comprise entre 10000 g/mole et 40000 g/mole.

Les propriétés des compositions selon l'invention (essais 1, 2, et 3) ont été comparées à des enduits de lissage soit réalisés avec le liant ettringitique binaire associé à de la caséine + chaux (4, 5, 6) soit réalisés avec les liants ettringitiques ternaires classiques connus (7) Les résultats sont résumés dans le tableau 3.

**Tableau 3**

| | invention | | | Comparatif | | | |
|---|---|---|---|---|---|---|---|
| N° Essai | 1 | 2 | 3 | 4 | 5 | 6 | 7 |
| Auto-Etalement 7 min (mm) | 153 | 152 | 155 | 156 | 148 | 140 | 155 |
| Auto-Etalement 20 min (mm) | 154 | 155 | 155 | 146 | 141 | 110 | 152 |
| Temps de gélification (min) | 28 | 35 | 34 | 32 | 30 | 28 | 37 |
| Début de prise (min) | 34 | 39 | 39 | 60 | 55 | 55 | 55 |
| Fin de prise (min) | 40 | 45 | 47 | 70 | 70 | 65 | 65 |
| | | | | | | | |
| Rc 2h00 (MPa) | 8,5 | 7,2 | 6,4 | 14,4 | 14,7 | 13,8 | 1 |
| Rc 28 jours (MPa) | 39 | 38,8 | 40,6 | 37 | 39,2 | 44,8 | 37,6 |
| Rf 28 jours(MPa) | 6,4 | 6,3 | 7,2 | 7,1 | 7,5 | 11 | 6,2 |
| Adhérence (Mpa) | 2,2 | 2,2 | 2,8 | 1,7 | 2,4 | 2,9 | 2,1 |
| Adhérence après action de l'eau (Mpa) | 2,7 | 2,4 | 2,9 | 1,6 | 1,4 | 1,4 | 1,8 |
| Dureté Brinell, kg/cm2 | 1208 | 1524 | 1350 | 557 | 516 | 692 | 700 |
| Dureté Brinell après humidification kg/cm2 | 1468 | 1629 | 1650 | 509 | 548 | 736 | 550 |
| Usure Taber à 600 tours ( perte de masse en grammes ) | 5,86 | 4,33 | 2,7 | 4,59 | 4,83 | 2,2 | 3,83 |

Le temps de gélification et l'auto-étalement sont mesurés selon le protocole opératoire décrit dans le guide technique pour l'avis technique et le classement P. Cahiers du CSTB, n° 2893.

Les résistances mécaniques en compression ( Rc) et en flexion (Rf ) sont mesurées sur des éprouvettes 2 x 2 x 16 cm, conservées à 20°C et 70% d'hygrométrie. Rc 2h00 représente la mesure faite 2h00 après mise en contact du mortier sec avec l'eau de gâchage ; Rc 28 jours est la valeur obtenue à l'échéance 28 jours.

L'adhérence à sec est mesurée avec un dynanomètre Sattec selon le protocole opératoire décrit dans le guide technique pour l'avis technique et le classement P. Cahiers du CSTB, n° 2893, sur support béton à 28 jours, sans primaire d'accrochage, en MPa. Les mesures après action de l'eau sont réalisées sur des maquettes conditionnées 7 jours à l'ambiance du laboratoire, immergées 24 heures dans l'eau puis reconditionnées 7 jours à l'ambiance du laboratoire avant mesure.

Les essais de résistance à l'usure par abrasion sont conduits à l'aide d'une machine Taber (T. Taber Industries, 455 Bryant St., P.O. Box 164, North Tonawanda, NY 14120-9911) décrite succintement dans la norme ASTM D 4060-95.

Les meules utilisées ont les caractéristiques suivantes : Calibrade H-22 (diamètre 50mm, largeur de la bande 13mm)

Un poids est appliqué sur chacune des deux meules à l'aide de 2 masses de 250g chacune auquel s'ajoute le poids du bras de support, soit 250g. Le poids total supporté par chaque meule est donc égal à 500g. L'échantillon est constitué d'un disque de 100mm de diamètre, 10 mm d'épaisseur, percé d'un trou en son centre pour le centrage sur la platine d'essai. L'échantillon est pesé dans l'ambiance du laboratoire d'essai, après soufflage à l'air comprimé. Les essais sont conduits à l'ambiance du laboratoire, soit 20°C - 65% d'Humidité Relative. Les meules sont mises en contact du disque, sous la contrainte des masses, et plusieurs séries successives de rotations du disque sont réalisées : n tours, puis arrêt, démontage du disque et des meules, nettoyage des meules et du disque par soufflage à l'air comprimé, pesée du disque. Il est d'abord procédé à 3 séries de 50 tours, suivie d'une série de 150 tours et d'une dernière de 300 tours. La perte de masse absolue en fonction du nombre de rotations permet d'évaluer la résistance à l'usure du matériau. Par souci de simplicité dans la présentation des résultats, seule la perte de masse après 600 rotations est indiquée dans les exemples.

La dureté Brinell est déterminée à l'aide d'un micro-duromètre type B (Société d'Ajustage et de Mécanique de Précision, 142 bis, rue de Pelleport - 75020 Paris). Elle est calculée à partir de la mesure de profondeur de pénétration dans le matériau d'une bille d'acier de diamètre connu sous une charge donnée.

Un échantillon parallélépipédique (100mm X 50mm X 20mm) est utilisé. La bille a un diamètre de 5.9mm ; la charge est choisie de manière à obtenir une pénétration comprise entre 75 et 100 microns. La montée en charge se fait progressivement et la profondeur de pénétration est mesurée au moyen d'un objectif muni d'un réticule intégré dans l'appareil. La dureté Brinell R est donnée par la relation suivante :

$$R\ (kg/cm2) = (Charge - 0{,}2) * 105/(\pi * a * D)$$

D : diamètre de la bille (en mm)
a : profondeur de pénétration (en $\mu$m)
Charge appliquée (en kg)
Le résultat donné dans le tableau est la moyenne de 5 mesures.

La mesure après humidification de surface est réalisée selon le protocole décrit dans le guide technique pour l'avis technique et le classement P. Cahiers du CSTB, n° 2893.

On observe qu'un mortier selon l'invention comprenant de 0,1% à 0,2 % de PCP et 1 à 1,9% de résine EVA (essais 1, 2, et 3), possède des performances de dureté (à sec et après humidification) et d'adhérence après action de l'eau nettement supérieures à celles que l'on obtient avec un mortier comprenant le liant ettringitique binaire mais associé à 0,5 % de fluidifiant à base de caséine + chaux et soit 1% de polymère structurant (essais 4, 5), soit 3% de résine EVA (essai 6). Le mortier selon l'invention, possède également des performances supérieures à un mortier réalisé avec les liants ettringitiques ternaires classiques comprenant un fluidifiant à base de caséine et 3,5% de résine structurante (essai 7).

**Exemple 8, 9, 10, 11, comparatif 7.**

On réalise des enduits de lissage dont les caractéristiques sont dans le tableau 1. Les concentrations et types de résine et de fluidifiant à base de PCP sont rassemblées dans le tableau 4.

**Tableau 4**

| | Comparatif | invention | | | |
|---|---|---|---|---|---|
| essai | 7 | 8 | 9 | 10 | 11 |
| Résine structurante | EVA | PVA | PVA | PVA | PVA |
| Type de résine | RE 523 Z | PVA1 | PVA2 | PVA3 | PVA4 |
| Dosage (%) | 3,5 | 1 | 0,5 | 0,5 | 1 |
| fluidifiant | Caséine + Chaux | PCPa | PCPa | PCPb | PCPb |
| Dosage Fluidifiant (%) | 0,5 | 0,2 | 0,2 | 0,2 | 0,1 |
| Ether de Cellulose | ? | 0,04 | 0,04 | 0,04 | 0,04 |

PVA1 est un alcool de polyvinyle avec un taux d'hydrolyse de 70%, dont la viscosité d'une solution à 4% à

20°C est de 5.5 mPa.s.

PVA2 est un poly(vinylalcohol-co-vinylacétate- co-itaconic acid) avec un taux d'hydrolyse de 96%, dont la viscosité d'une solution à 4% à 20°C est de 31 mPa.s.

PVA3 est un alcool de polyvinyle avec un taux d'hydrolyse de 88%, dont la viscosité d'une solution à 4% à 20°C est de 23 mPa.s

PVA4 est un alcool de polyvinyle avec un taux d'hydrolyse de 88%, dont la viscosité d'une solution à 4% à 20°C est de est de 4 mPa.s

Les propriétés des compositions selon l'invention (essais 8 à 11) ont été comparées à un enduit de lissage connu 7. Les résultats sont résumés dans le tableau 5.

**Tableau 5**

| N° Essai | 7 | 8 | 9 | 10 | 11 |
|---|---|---|---|---|---|
| Auto-Etalement 7 min (mm) | 155 | 152 | 166 | 150 | 150 |
| Auto-Etalement 20 min (mm) | 152 | 150 | 158 | 153 | 151 |
| Temps de gélification (min) | 37 | 32 | 35 | 43 | 46 |
| Début de prise (min) | 55 | 39 | 38 | 48 | 52 |
| Fin de prise (min) | 65 | 47 | 46 | 52 | 58 |
| Rc 2h00 (MPa) | 1 | 5,3 | 6,4 | 6 | 3,5 |
| Rc 28 jours (MPa) | 37,6 | 33,2 | 39,1 | 39 | 37,3 |
| Rf 28 jours (MPa) | 6,20 | 10 | 8,50 | 8,7 | 9,6 |
| Adhérence à 28j (MPa) | 2,1 | 2,9 | 2,1 | 2,3 | 2,6 |
| Adhésion après action de l'eau (MPa) | 1,8 | 2,4 | 2,6 | 2,6 | 2,6 |
| Dureté Brinell ( kg / cm2 ) Hardness | 700 | 1550 | 1800 | 1490 | 1560 |
| Dureté Brinell après humidification ( kg / cm2) | 550 | 1200 | 1750 | 1350 | 1200 |
| Usure Taber à 600 tours ( perte de masse en grammes ) | 3,83 | 0,63 | 1,16 | 1,3 | 0,96 |

Sur l'ensemble des critères de propriétés mécaniques les performances obtenues avec des dosages en PCP de 0,1% à 0,2% et des teneurs en polymère structurant de l'ordre de 0,5 à 1% sont remarquables et significativement supérieures à celles de l'art antérieur caractérisé par des dosages en polymère structurant supérieurs à 2,5% ( 3,5% dans l'exemple 7 ).

**Exemple 12**

La porosité totale et la surface développée des pores entre les mortiers 3 et 11 selon l'invention, et le mortier 7 de l'art antérieur ont été comparées dans le tableau 6. Ces valeurs sont issues de mesures réalisées à l'échéance 28 jours avec un porosimètre à intrusion de Mercure de la société Micromeritics Instrument Corporation. La quantité d'hydrates dans les mortiers à 28 jours a été déterminée par Analyse Enthalpique Différentielle (Differential Scanning Calorimetry - Perklin Elmer 7). On observe que, l'association du liant ettringitique binaire avec un PCP et de faibles teneurs en polymères structurant, se caractérise par un meilleur rendement d'hydratation (plus d'hydrates formés) conduisant à un matériau durci de porosité plus faible que les mortiers réalisés selon l'art antérieur. Ceci vaut alors que le taux de gâchage initial des mortiers est identique, ( Eau / Solides = 24% ) et pourrait être à l'origine des meilleures propriétés mécaniques des mortiers réalisés selon l'invention.

**Tableau 6**

| Exemple n° | 7 | 11 | 3 |
|---|---|---|---|
| Porosité totale en % | 24,0 | 21,1 | 22,9 |
| Surface développée des pores, en m2/g | 10,7 | 5,6 | 6,1 |
| Quantité d'hydrates en joules /g | 149 | 192 | 195 |

**Exemple 13**

Les duretés de surface à sec (figure 1) et les dureté de surface après humidification (figure 2) sont comparées entre des mortiers selon l'invention (formulations des essais 1, à 3 et 8 à 11 ) et des mortiers à base de caséine répondant à la formulation des essais 4 à 7. On observe (figures 1 et 2 ) que les formulations de l'invention présentent des duretés de surface supérieures aux mortiers connus, comprenant un liant ettringitique binaire ou classique, un fluidifiant à base de caséine et pour certains d'entre eux des teneurs en poudre redispersable supérieures à 2,5%

**Exemple 14**

La résistance à l'usure a été comparée entre des mortiers répondant aux formulations des essais 3 et 8 à 11 et des mortiers connus, répondant à la formulation de l'essai 7 (figure 3). L'échantillon testé est d'autant plus résistant à l'usure que la perte de masse est faible. On observe sur la figure 3, que la perte de masse en (g) à 600 cycles, représentée en ordonnée, des formulations 3 et 8 à 11 est plus faible que la perte de masse de la formulation 7, ceci pour des teneurs en polymère très inférieures à celles de la formulation 7.

**Exemple 15**

L'adhérence à sec (figure 4), et l'adhérence après action de l'eau (figure 5) ont été comparées entre des mortiers répondant aux formulations selon l'invention 1 à 3 et 8 à 11 et des mortiers connus, répondant à la formulation des essais 4 à 7. Les formules de l'invention présentent des valeurs d'adhérence au support à sec équivalentes à celles des mortiers connus malgré des teneurs en polymère structurant très faibles, et des performances après action de l'eau nettement supérieures.

**Revendications**

1. Mortier dense comprenant :

    (i) un liant ettringitique comprenant des sulfates de calcium et un composé minéral d'aluminates de calcium, le composé minéral d'aluminates de calcium comprenant des oxydes de calcium C et d'aluminium A, solubles et combinés en une ou plusieurs phases minéralogiques cristallisées et/ou amorphes, dans des proportions telles que :

    - le rapport molaire C/A utile du composé minéral d'aluminates de calcium est compris entre 1,2 et 2,7 ;
    - la somme en poids des phases (C+A) utiles représente au moins 30% du poids total du composé minéral,

    (ii) au moins un polymère peigne de poly(oxyde d'alkylène) (PCP) et,
    (iii) au moins une résine organique structurante,

    **caractérisé en ce que** ladite résine organique structurante représente moins de 2% en poids du mortier.

2. Mortier dense selon la revendication 1, **caractérisé en ce qu'**il comprend au moins 0,3% de résine organique structurante, par rapport au poids du mortier.

3. Mortier dense selon la revendication 1 ou 2, **caractérisé en ce qu'**il comprend 0,05 % à 0,3 % de polymère peigne de poly(oxyde d'alkylène) (PCP), de préférence 0,1 % à 0,2 % de polymère peigne de poly(oxyde d'alkylène) (PCP), par rapport au poids du mortier.

4. Mortier dense selon l'une quelconque des revendications 1 à 3, **caractérisé en ce que** ladite résine organique structurante représente 1% en poids du mortier ou moins.

5. Mortier dense selon l'une quelconque des revendications 1 à 4, **caractérisé en ce que** le polymère peigne de poly (oxyde d'alkylène) (PCP) est choisi parmi les copolymères d'acides carboxyliques et d'ester carboxyliques de poly (Alkylène Glycol), les copolymères d'acides carboxylique et d'amide de poly(AlkylèneGlycol), les copolymères d'acides carboxyliques et d'imide de poly(AlkylèneGlycol), les copolymères d'acides carboxyliques et d'ethers vinyliques de poly(alkylène glycol), neutralisés ou non neutralisés, et leurs mélanges.

6. Mortier dense selon l'une quelconque des revendications 1 à 5 **caractérisé en ce que** la résine organique structurante comprend au moins un polymère choisi parmi le poly(Acétate de vinyle), les copolymère d'acétate de vinyle et d'éthylène en poudre (EVA), les copolymères formés par copolymérisation de 2 ou plus des monomères choisis parmi l'éthylène, l'acétate de Vinyle, les esters vinyliques d'acides versatiques, le chlorure de vinyle, le laurate de vinyle, le styrène, le butadiène, l'acrylate d'alkyle, le méthacrylate d'alkyle, et l'anhydride maléïque et ses dérivés.

7. Mortier dense selon la revendication 6, **caractérisé en ce qu'**il comprend 0,2% en poids du mortier, d'au moins un polymère peigne de poly(oxyde d'alkylène) (PCP) et 1% en poids du mortier d'au moins un copolymère d'acétate de vinyle et d'éthylène en poudre (EVA).

8. Mortier dense selon l'une des revendications 1 à 5,
**caractérisé en ce que** la résine organique structurante comprend au moins un alcool polyvinylique (PVA), éventuellement modifié par inclusion de groupements acides carboxyliques dans sa structure.

9. Mortier dense selon la revendication 8 **caractérisé en ce qu'**il comprend 0,2% en poids du mortier, d'au moins un polymère peigne de poly(oxyde d'alkylène) (PCP) et 1% en poids du mortier d'au moins un alcool polyvinylique (PVA).

10. Mortier dense selon l'une quelconque des revendications 1 à 9 **caractérisé en ce que** le rapport pondéral composé minéral d'aluminates de calcium/sulfate de calcium au sein du liant ettringitique est compris entre 0,5 et 4, de préférence entre 1,5 et 3.

11. Mortier dense selon l'une quelconque des revendications 1 à 10, **caractérisé en ce que** le rapport molaire sulfate de calcium/oxyde d'aluminium A dans le liant ettringitique est compris entre 0,5 et 2.

12. Mortier dense selon l'une quelconque des revendications 1 à 11, **caractérisé en ce que** le rapport molaire C/A utile du composé minéral d'aluminates de calcium dans le liant ettringitique est compris entre 1,3 et 2,5, de préférence entre 1,6 et 2.

13. Mortier dense selon l'une quelconque des revendications 1 à 12, **caractérisé en ce que** le rapport molaire sulfate de calcium/oxyde d'aluminium A dans le liant ettringitique est compris entre 0,6 et 1,8, de préférence entre 0,8 et 1,7.

14. Mortier dense selon l'une quelconque des revendications 1 à 13 **caractérisé en ce qu'**il présente au moment du gâchage avec l'eau un rapport pondéral eau/solides inférieur à 0,5.

15. Mortier dense selon l'une quelconque des revendications 1 à 14, **caractérisé en ce qu'**il ne comprend pas de ciment portland ni de chaux hydraulique, ou comprend du ciment Portland et/ou de la chaux hydraulique à une teneur inférieure à 3,5% en poids par rapport au poids total du mortier sec.

16. Mortier dense selon l'une quelconque des revendications 1 à 15 **caractérisé en ce que** la somme en poids des phases (C+A) utiles représente au moins 50% en poids du poids total du composé minéral d'aluminates de calcium.

17. Mortier dense selon l'une quelconque des revendications 1 à 16 **caractérisé en ce que** le composé minéral d'aluminates de calcium est obtenu par cuisson dans un four à une température supérieure à 1100°C, sous forme de un ou plusieurs clinkers fondus ou frittés qui peuvent contenir des phases cristallisées ou des phases amorphes.

18. Mortier dense selon l'une quelconque des revendications 1 à 17 **caractérisé en ce que** le composé minéral d'aluminates de calcium est sous une phase minéralogique cristallisée choisie parmi CA, C12A7, C3A, C4A3$ ou sous une phase amorphe ou sous la forme d'un mélange d'au moins une desdites phases minéralogiques cristallisées et d'une phase amorphe.

19. Mortier dense selon la revendication 18 **caractérisé en ce que** le composé minéral d'aluminates de calcium comprend au moins 30% en poids de C12A7, de préférence au moins 50% en poids de C12A7, mieux de 50% à 85% en poids de C12A7 par rapport au poids total du composé minéral.

20. Mortier dense selon l'une quelconque des revendications 1 à 19 **caractérisé en ce que** le composé minéral d'aluminates de calcium comprend au moins une phase minéralogique cristallisée choisie parmi C2A(1-x)Fx, C2S, C2AS, C3S et leurs mélanges, où x est un entier appartenant à ] 0 ; 1].

21. Mortier dense selon l'une quelconque des revendications 1 à 20 **caractérisé en ce que** le composé minéral d'aluminates de calcium est broyé et présente une surface spécifique Blaine supérieure ou égale à 1500 $cm^2/g$.

22. Mortier dense selon la revendication 21 **caractérisé en ce que** le composé minéral d'aluminates de calcium est broyé à une surface spécifique Blaine comprise entre 2000 $cm^2/g$ et 5000 $cm^2/g$.

23. Mortier dense selon l'une quelconque des revendications 1 à 22, **caractérisée en ce que** le sulfate de calcium provient d'un composé choisi parmi les anhydrites, les semi-hydrates, le gypse et leurs mélanges.

24. Mortier dense selon l'une des revendications 1 à 23,
**caractérisé en ce qu'**il comprend en outre :

- fillers calcaires ou sables siliceux : de 25 à 85% en poids par rapport au poids total du mortier sec,
- chaux et/ou ciment Portland : de 0% à 3,5% en poids par rapport au poids total du mortier sec, et
- des additifs complémentaires de rhéologie et/ou des additifs régulateurs de prise.

25. Mortier dense selon la revendication 24 **caractérisé en ce qu'**il comprend :

- fillers calcaires ou sables siliceux : de 50 à 80% en poids par rapport au poids total du mortier sec,
- chaux et/ou ciment Portland : de 0% à 0,5% en poids par rapport au poids total du mortier sec, et
- des additifs complémentaires de rhéologie et/ou des additifs régulateurs de prise.

26. Mortier dense selon les revendications 24 ou 25 **caractérisé en ce que** les additifs de rhéologie représentent de 0,1 % à 0,5% du poids total du mortier sec, et les additifs régulateurs de prise représentent de 0,1 % à 0,5% du poids total du mortier sec.

27. Mortier dense selon l'une quelconque des revendications 1 à 26, **caractérisé en ce qu'**il est obtenu par gâchage avec de l'eau dans une quantité telle que le rapport pondéral eau/solides soit inférieur à 0,5.

28. Utilisation d'un polymère peigne de poly(oxyde d'alkylène) (PCP) pour la formulation d'un mortier selon l'une quelconque des revendications 1 à 27.

## Claims

1. A dense mortar which comprises:

(i) an ettringite binder comprising calcium sulphates and a calcium aluminates mineral compound, the calcium aluminates mineral compound comprising oxides of calcium C and of aluminium A, which are soluble and combined in one or several crystallized and/or amorphous mineralogical phases in such proportions that:

- the useful C/A molar ratio of the calcium aluminates mineral compound is in the range of 1.2 to 2.7;
- the sum in weight of the useful (C+A) phases represents at least 30% of the total weight of the mineral compound,

(ii) at least one poly(alkylene oxide) comb polymer (PCP) and,
(iii) at least one structuring organic resin,

**characterised in that** the amount of structuring organic resin is less than 2% by weight of the mortar.

2. A dense mortar according to claim 1, **characterised in that** it comprises at least 0.3% by weight of structuring organic resin, based on the weight of the mortar.

3. A dense mortar according to claim 1 or 2, **characterised in that** it comprises 0.05% to 0.3% of poly(alkylene oxide) comb polymer (PCP), preferably, 0.1% to 0.2% of poly(alkylene oxide) comb polymer (PCP); based on the weight of the mortar.

4. A dense mortar according to any one of claims 1 to 3, **characterised in that** the amount of said structuring organic

resin is 1% by weight of the mortar, or less.

5. A dense mortar according to any one of claims 1 to 4 **characterised in that** the poly(alkylene oxide) comb polymer (PCP) is selected from among the copolymers of carboxylic acids and carboxylic esters of poly(alkylene glycol), copolymers of carboxylic acids and poly(alkylene glycol) amide, copolymers of carboxylic acids and poly(alkylene glycol) imide, copolymers of carboxylic acids and vinylic ethers of poly(alkylene glycol), either neutralised or not neutralised, and mixtures thereof.

6. A dense mortar according to any one of claims 1 to 5 **characterised in that** the structuring organic resin comprises at least one polymer selected among poly(vinyl acetate), powdered copolymers of vinyl and ethylene acetate (EVA), copolymers formed by copolymerisation of 2 or more monomers selected among ethylene, vinyl acetate, vinyl esters of versatic acids, vinyl chloride, vinyl laurate, styrene, butadiene, alkyl acrylate, alkyl methacrylate, maleic anhydride and derivatives thereof.

7. A dense mortar according to claim 6 **characterised in that** it comprises 0.2% by weight of the mortar, of at least one poly(alkylene oxide) comb polymer (PCP) and 1% by weight of the mortar of at least one powdered copolymer of vinyl and ethylene acetate (EVA).

8. A dense mortar according to any one of claims 1 to 5 **characterised in that** the structuring organic resin comprises at least one polyvinyl alcohol (PVA), possibly modified by the inclusion of carboxylic acid groups in its structure.

9. A dense mortar according to claim 8 **characterised in that** it comprises 0.2% by weight of the mortar, of at least one poly(alkylene oxide) comb polymer (PCP) and 1% by weight of mortar of at least one polyvinyl alcohol (PVA).

10. A dense mortar according to any one of claims 1 to 9 **characterised in that** the weight ratio of calcium aluminates mineral compound /calcium sulphate within the ettringite binder is comprised between 0.5 and 4, and preferably between 1.5 and 3.

11. A dense mortar according to any one of claims 1 to 10 **characterised in that** the molar ratio of calcium sulphate/ aluminium oxide A in the ettringite binder is comprised between 0.5 and 2.

12. A dense mortar according to any one of claims 1 to 11 **characterised in that** the useful C/A molar ratio of calcium aluminates mineral compound within the ettringite binder is comprised between 1.3 and 2.5, and preferably between 1.6 and 2.

13. A dense mortar according to any one of claims 1 to 12 **characterised in that** the molar ratio calcium sulphate /aluminium oxide A in the ettringite binder is comprised between 0.6 and 1.8, and preferably between 0.8 and 1.7.

14. A dense mortar according to any one of claims 1 to 13 **characterised in that** it has at the time of mixing with water a water/solids weight ratio lower than 0.5.

15. A dense mortar according to any one of claims 1 to 14, **characterised in that** it does not comprises any Portland cement or hydraulic lime, or comprises Portland cement and/or hydraulic lime at a content of less than 3.5% by weight based on the total weight of dry mortar.

16. A dense mortar according to any one of claims 1 to 15, **characterised in that** the sum in weight of useful (C+A) phases is at least 50% by weight of the total weight of the calcium aluminates mineral compound.

17. A dense mortar according to any one of claims 1 to 16, **characterised in that** the calcium aluminates mineral compound is obtained through curing in a furnace at a temperature of over 1100°C, in the form of one or several melted or sintered clinkers that may contain crystallised phases or amorphous phases.

18. A dense mortar according to any one of claims 1 to 17, **characterised in that** the calcium aluminates mineral compound is under the form of a crystallised mineralogical phase selected among CA, C12A7, C3A, C4A3$ or under the form of an amorphous phase or under the form of a mixture of at least one of said crystallised mineralogical phases and an amorphous phase.

19. A dense mortar according to claim 18 **characterised in that** the calcium aluminates mineral compound comprises

at least 30% by weight of C12A7, preferably at least 50% by weight of C12A7, more preferably from 50% to 85% by weight of C12A7 based on the total weight of the mineral compound.

**20.** A dense mortar according to any one of claims 1 to 19 **characterised in that** the calcium aluminates mineral compound comprises at least one crystallised mineralogical phase selected among C2A(1-x)Fx, C2S, C2AS, C3S and mixtures thereof, wherein x is an integer belonging to ]0; 1].

**21.** A dense mortar according to any one of claims 1 to 20 **characterised in that** the calcium aluminates mineral compound is ground and has a Blaine surface area greater than or equal to 1500 $cm^2/g$.

**22.** A dense mortar according to claim 21 **characterised in that** the calcium aluminates mineral compound is ground to a Blaine surface area comprised between 2000 $cm^2/g$ and 5000 $cm^2/g$.

**23.** A dense mortar according to any one of claims 1 to 22, **characterised in that** the calcium sulphate is derived from a compound selected among anhydrites, semi-hydrates, gypsum and mixtures thereof.

**24.** A dense mortar according to one of claims 1 to 23, **characterised in that** it comprises furthermore:

- chalk fillers or siliceous sands: from 25 to 85% by weight based on the total weight of the dry mortar,
- lime and/or Portland cement: from 0% to 3.5% by weight based on the total weight of the dry mortar, and
- complementary rheological additives and/or setting regulating additives.

**25.** A dense mortar according to claim 24, **characterised in that** it comprises :

- chalk fillers or siliceous sands: from 50 to 80% by weight based on the total weight of the dry mortar,
- lime and/or Portland cement: from 0% to 0.5% by weight based on the total weight of the dry mortar, and
- complementary rheological additives and/or setting regulating additives.

**26.** A dense mortar according to claims 24 or 25 **characterised in that** the amount of rheological additives is 0.1 % to 0.5% based on the total weight of the dry mortar, and the amount of setting regulating additives is 0.1 % to 0.5% based on the total weight of the dry mortar.

**27.** A dense mortar according to any one of claims 1 to 26 **characterised in that** it is obtained by mixing with water in a quantity such that the water/solid weight ratio is less than 0.5.

**28.** The use of a poly(alkylene oxide) comb polymer (PCP) for the formulation of a mortar according to any one of claims 1 to 27.

## Patentansprüche

**1.** Dichter Mörtel, umfassend:

(i) ein Ettringit-Bindemittel, umfassend Calciumsulfate und eine mineralische Calciumaluminat-Verbindung, wobei die mineralische Calciumaluminat-Verbindung Calciumoxide C und Aluminiumoxide A umfasst, die in einer oder mehreren kristallisierten und/oder amorphen mineralogischen Phasen löslich und in Verhältnissen vereinigt sind wie:

- das nutzbare Stoffmengenverhältnis C/A der mineralischen Calciumaluminat-Verbindung beträgt zwischen 1,2 und 2,7;
- die auf das Gewicht bezogene Summe der nutzbaren Phasen (C + A) stellt mindestens 30 % des Gesamtgewichts der mineralischen Verbindung dar,

(ii) mindestens ein Poly(alkylenoxid)-Kammpolymer (PCP) und
(iii) mindestens ein strukturierendes organisches Harz,

**dadurch gekennzeichnet, dass** das strukturierende organische Harz weniger als 2 Gew.-% des Mörtels darstellt.

2. Dichter Mörtel nach Anspruch 1, **dadurch gekennzeichnet, dass** er mindestens 0,3 % des strukturierenden organischen Harzes, bezogen auf das Gewicht des Mörtels, umfasst.

3. Dichter Mörtel nach Anspruch 1 oder 2, **dadurch gekennzeichnet, dass** er 0,05 % bis 0,3 % des Poly(alkylenoxid)-Kammpolymers (PCP), vorzugsweise 0,1 % bis 0,2 % des Poly(alkylenoxid)-Kammpolymers (PCP), bezogen auf das Gewicht des Mörtels, umfasst.

4. Dichter Mörtel nach einem der Ansprüche 1 bis 3, **dadurch gekennzeichnet, dass** das strukturgebende organische Harz 1 % oder weniger des Mörtels darstellt.

5. Dichter Mörtel nach einem der Ansprüche 1 bis 4, **dadurch gekennzeichnet, dass** das Poly(alkylenoxid)-Kammpolymer (PCP) aus den Carbonsäure- und Carbonsäureester-Copolymeren von Poly(alkylenglycol), den Carbonsäure- und Amid-Copolymeren von Poly(alkylenglycol), den Carbonsäure- und Imid-Copolymeren von Poly(alkylenglycol), den Carbonsäure- und Vinylether-Copolymeren von Poly(alkylenglycol), neutralisiert oder nicht neutralisiert, und Mischungen davon ausgewählt ist.

6. Dichter Mörtel nach einem der Ansprüche 1 bis 5, **dadurch gekennzeichnet, dass** das strukturierende organische Harz mindestens ein Polymer umfasst, das ausgewählt ist aus Poly(vinylacetat), den Vinylacetat-Ethylen-Copolymeren (EVA) in Pulverform, den Copolymeren, die durch eine Copolymerisation von 2 oder mehr Monomeren gebildet sind, die aus Ethylen, Vinylacetat, den Vinylestern von Versatic Acid, Vinylchlorid, Vinyllaurat, Styrol, Butadien, einem Alkylacrylat, einem Alkylmethacrylat und Maleinsäureanhydrid und Derivaten davon ausgewählt sind.

7. Dichter Mörtel nach Anspruch 6, **dadurch gekennzeichnet, dass** er 0,2 %, bezogen auf das Gewicht des Mörtels, mindestens eines Poly-(alkylenoxid)-Kammpolymers (PCP) und 1 %, bezogen auf das Gewicht des Mörtels, mindestens eines Vinylacetat-Ethylen-Copolymers (EVA) in Pulverform enthält.

8. Dichter Mörtel nach einem der Ansprüche 1 bis 5, **dadurch gekennzeichnet, dass** das strukturgebende organische Harz mindestens einen Polyvinylalkohol (PVA) umfasst, der gegebenenfalls durch Einschluss von Carbonsäuregruppen in seiner Struktur modifiziert ist.

9. Dichter Mörtel nach Anspruch 8, **dadurch gekennzeichnet, dass** er 0,2 %, bezogen auf das Gewicht des Mörtels, mindestens eines Poly-(alkylenoxid)-Kammpolymers (PCP) und 1 %, bezogen auf das Gewicht des Mörtels, mindestens eines Polyvinylalkohols (PVA) umfasst.

10. Dichter Mörtel nach einem der Ansprüche 1 bis 9, **dadurch gekennzeichnet, dass** das Stoffmengenverhältnis der mineralischen Calciumaluminat/Calciumsulfat-Verbindung im Ettringit-Bindemittel zwischen 0,5 und 4, vorzugsweise zwischen 1,5 und 3 beträgt.

11. Dichter Mörtel nach einem der Ansprüche 1 bis 10, **dadurch gekennzeichnet, dass** das Stoffmengenverhältnis Calciumsulfat/Aluminiumoxid A im Ettringit-Bindemittel zwischen 0,5 und 2 beträgt.

12. Dichter Mörtel nach einem der Ansprüche 1 bis 11, **dadurch gekennzeichnet, dass** das nutzbare Stoffmengenverhältnis C/A der mineralischen Calciumaluminat-Verbindung im Ettringit-Bindemittel zwischen 1,3 und 2,5, vorzugsweise zwischen 1,6 und 2 beträgt.

13. Dichter Mörtel nach einem der Ansprüche 1 bis 12, **dadurch gekennzeichnet, dass** das Stoffmengenverhältnis Calciumsulfat/Aluminiumoxid A im Ettringit-Bindemittel zwischen 0,6 und 1,8, vorzugsweise zwischen 0,8 und 1,7 beträgt.

14. Dichter Mörtel nach einem der Ansprüche 1 bis 13, **dadurch gekennzeichnet, dass** er im Moment des Anmachens mit Wasser ein Gewichtsverhältnis Wasser/Feststoff von weniger als 0,5 aufweist.

15. Dichter Mörtel nach einem der Ansprüche 1 bis 14, **dadurch gekennzeichnet, dass** er weder Portland-Zement noch hydraulischen Kalk umfasst oder Portland-Zement und/oder hydraulischen Kalk mit einem Gehalt von weniger als 3,5 %, bezogen auf das Gesamtgewicht des trockenen Mörtels, umfasst.

16. Dichter Mörtel nach einem der Ansprüche 1 bis 15, **dadurch gekennzeichnet, dass** die Summe, bezogen auf das Gewicht, der nutzbaren Phasen (C + A) mindestens 50 %, bezogen auf das Gesamtgewicht der mineralischen

Calciumaluminat-Verbindung, beträgt.

**17.** Dichter Mörtel nach einem der Ansprüche 1 bis 16, **dadurch gekennzeichnet, dass** die mineralische Calciumaluminat-Verbindung durch Brennen in einem Ofen bei einer Temperatur oberhalb von 1100 °C in Form eines oder mehrerer geschmolzener oder gesinterter Klinker erhalten wird, der bzw. die kristalline Phasen oder amorphe Phasen enthalten kann bzw. können.

**18.** Dichter Mörtel nach einem der Ansprüche 1 bis 17, **dadurch gekennzeichnet, dass** die mineralische Calciumaluminat-Verbindung in Form einer kristallisierten mineralogischen Phase, die aus CA, C12A7, C3A, C4A3$ ausgewählt ist, oder in Form einer amorphen Phase oder in Form einer Mischung aus mindestens einer der kristallisierten mineralogischen Phasen und einer amorphen Phase vorliegt.

**19.** Dichter Mörtel nach Anspruch 18, **dadurch gekennzeichnet, dass** die mineralische Calciumaluminat-Verbindung mindestens 30 Gew.-% C12A7, vorzugsweise mindestens 50 Gew.-% C12A7, noch mehr bevorzugt zwischen 50 Gew.-% und 85 Gew.-% C12A7, bezogen auf das Gesamtgewicht der mineralischen Verbindung, aufweist.

**20.** Dichter Mörtel nach einem der Ansprüche 1 bis 19, **dadurch gekennzeichnet, dass** die mineralische Calciumaluminat-Verbindung mindestens eine kristallisierte mineralogische Phase umfasst, die aus C2A(1-x)Fx, C2S, C2AS, C3S und deren Mischungen ausgewählt ist, wobei x eine zu [0; 1] gehörende ganze Zahl ist.

**21.** Dichter Mörtel nach einem der Ansprüche 1 bis 20, **dadurch gekennzeichnet, dass** die mineralische Calciumaluminat-Verbindung zerkleinert ist und eine spezifische Oberfläche nach Blaine von mehr als oder gleich 1500 $cm^2/g$ hat.

**22.** Dichter Mörtel nach Anspruch 21, **dadurch gekennzeichnet, dass** die mineralische Calciumaluminat-Verbindung so zerkleinert ist, dass sie eine spezifische Oberfläche nach Blaine zwischen 2000 $cm^2/g$ und 5000 $cm^2/g$ aufweist.

**23.** Dichter Mörtel nach einem der Ansprüche 1 bis 22, **dadurch gekennzeichnet, dass** das Calciumsulfat aus einer Verbindung stammt, die aus den Anhydriten, Halbhydraten, Gips und Mischungen davon ausgewählt ist.

**24.** Dichter Mörtel nach einem der Ansprüche 1 bis 23, **dadurch gekennzeichnet, dass** er außerdem Folgendes enthält:

- kalkhaltige oder aus siliciumhaltigen Sanden bestehende Füllmittel: von 25 bis 85 Gew.-%, bezogen auf das Gesamtgewicht des trockenen Mörtels,
- Kalk und/oder Portland-Zement: von 0 Gew.-% bis 3,5 Gew.-%, bezogen auf das Gesamtgewicht des trockenen Mörtels, und
- ergänzende Rheologie-Additive und/oder das Abbinden regelnde Additive.

**25.** Dichter Mörtel nach Anspruch 24, **dadurch gekennzeichnet, dass** er Folgendes umfasst:

- kalkhaltige oder aus siliciumhaltigen Sanden bestehende Füllmittel: von 50 bis 80 Gew.-%, bezogen auf das Gesamtgewicht des trockenen Mörtels,
- Kalk und/oder Portland-Zement: von 0 Gew.-% bis 0,5 Gew.-%, bezogen auf das Gesamtgewicht des trockenen Mörtels, und
- ergänzende Rheologie-Additive und/oder das Abbinden regelnde Additive.

**26.** Dichter Mörtel nach Anspruch 24 oder 25, **dadurch gekennzeichnet, dass** die Rheologie-Additive 0,1 % bis 0,5 % des Gesamtgewichts des trockenen Mörtels darstellen und die abbindungsregelnden Additive 0,1 % bis 0,5 % des Gesamtgewichts des trockenen Mörtels darstellen.

**27.** Dichter Mörtel nach einem der Ansprüche 1 bis 26, **dadurch gekennzeichnet, dass** er durch Anmachen mit Wasser in einer solchen Menge, dass das Gewichtsverhältnis Wasser/Feststoffe weniger als 0,5 beträgt, erhalten wird.

**28.** Verwendung eines Poly(alkylenoxid)-Kammpolymers (PCP) zur Formulierung eines Mörtels nach einem der Ansprüche 1 bis 27.

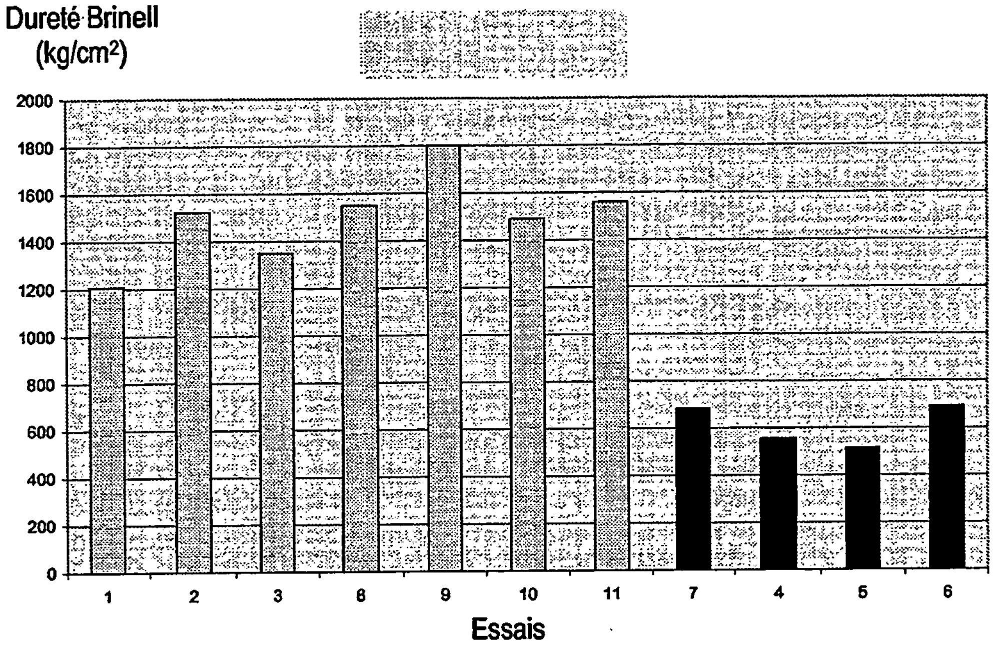
Dureté Brinell
(kg/cm2)
2000
1800
1600
1400
1200
1000
800
600
400
200
0
1
2
3
8
9
10
11
7
4
5
6
Essais

FIGURE 1

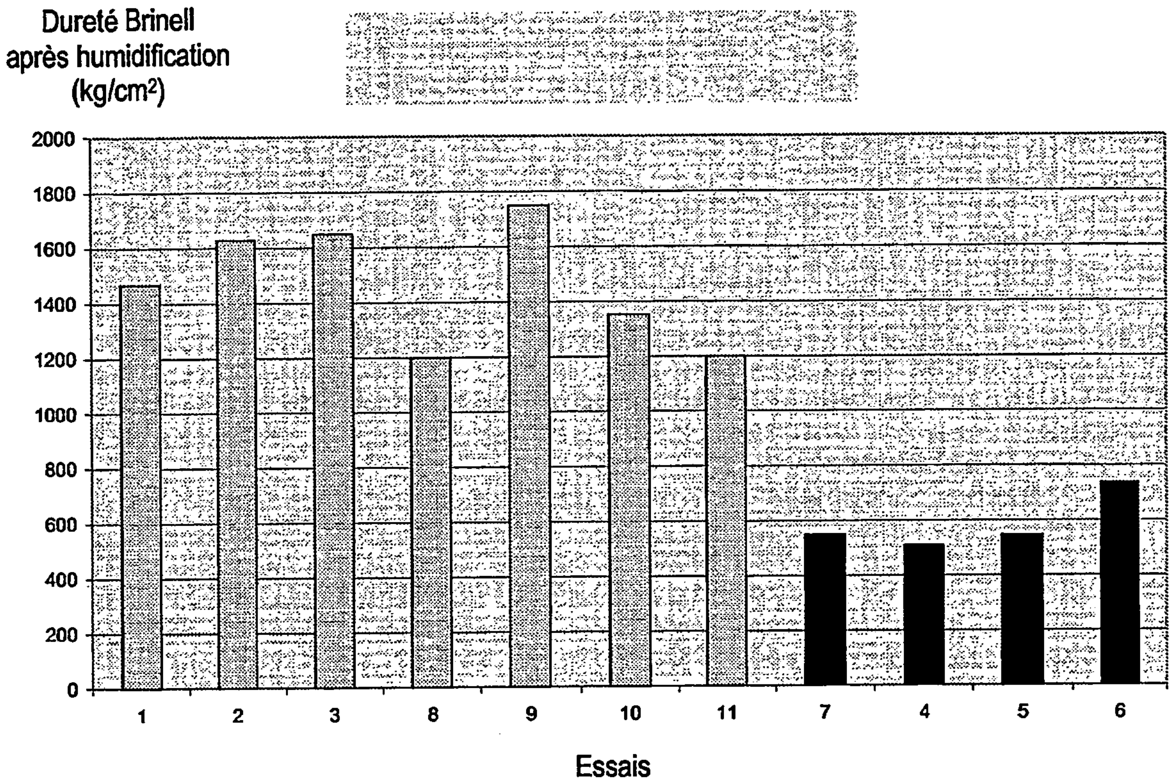
Dureté Brinell
après humidification
(kg/cm²)
2000
1800
1600
1400
1200
1000
800
600
400
200
0
1
2
3
8
9
10
11
7
4
5
6
Essais

FIGURE 2

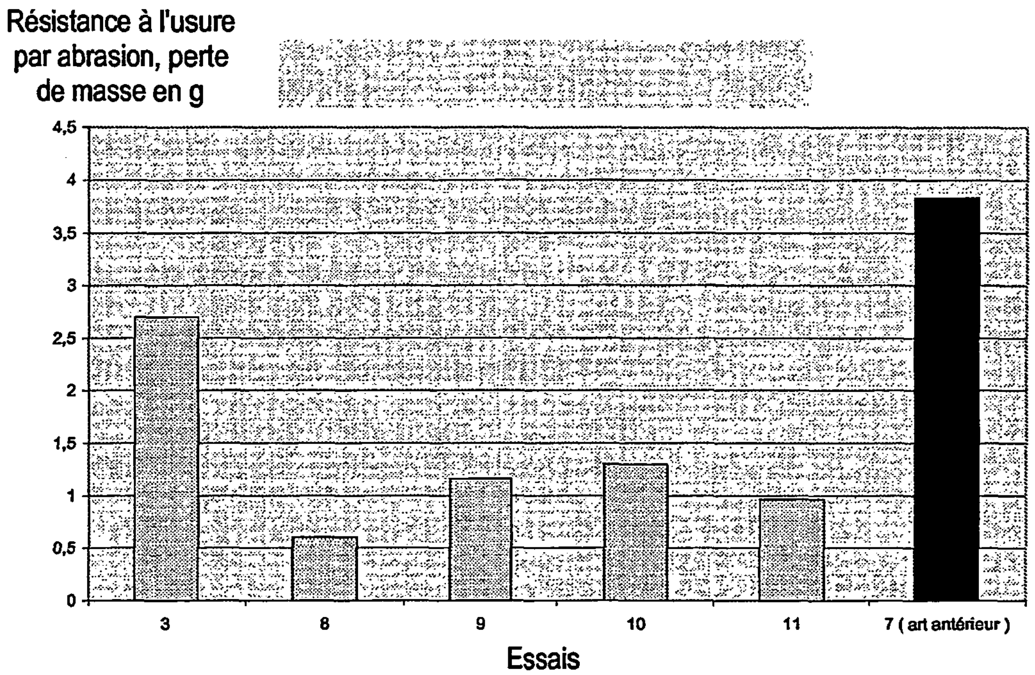
Résistance à l'usure par abrasion, perte de masse en g
4,5
4
3,5
3
2,5
2
1,5
1
0,5
0
3
8
9
10
11
7 ( art antérieur )
Essais

FIGURE 3

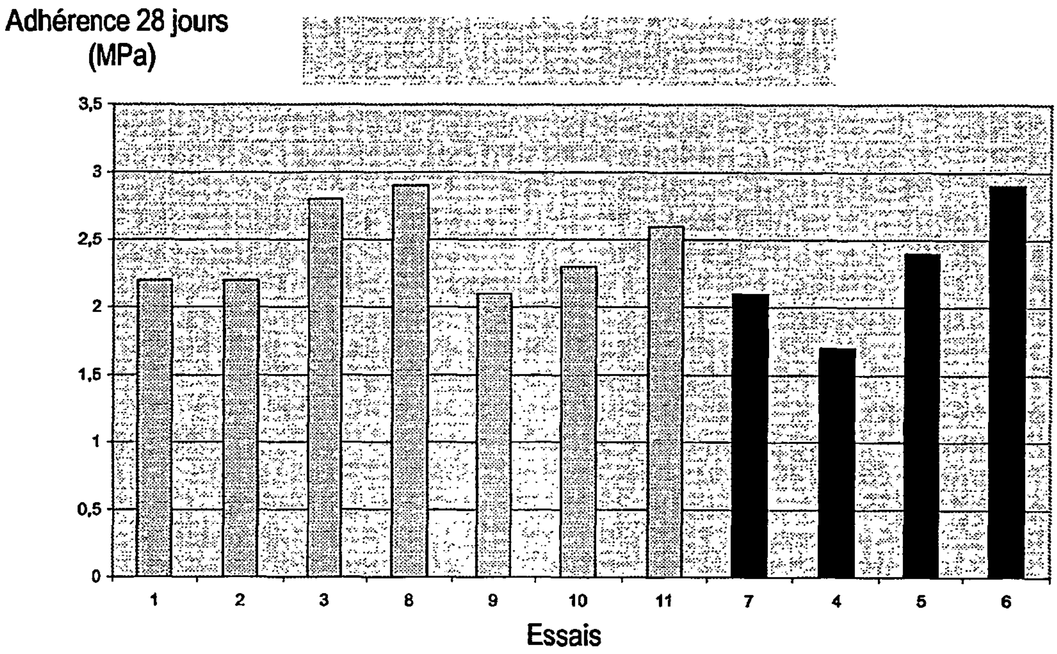
Adhérence 28 jours
(MPa)
3,5
3
2,5
2
1,5
1
0,5
0
1
2
3
8
9
10
11
7
4
5
6
Essais

FIGURE 4

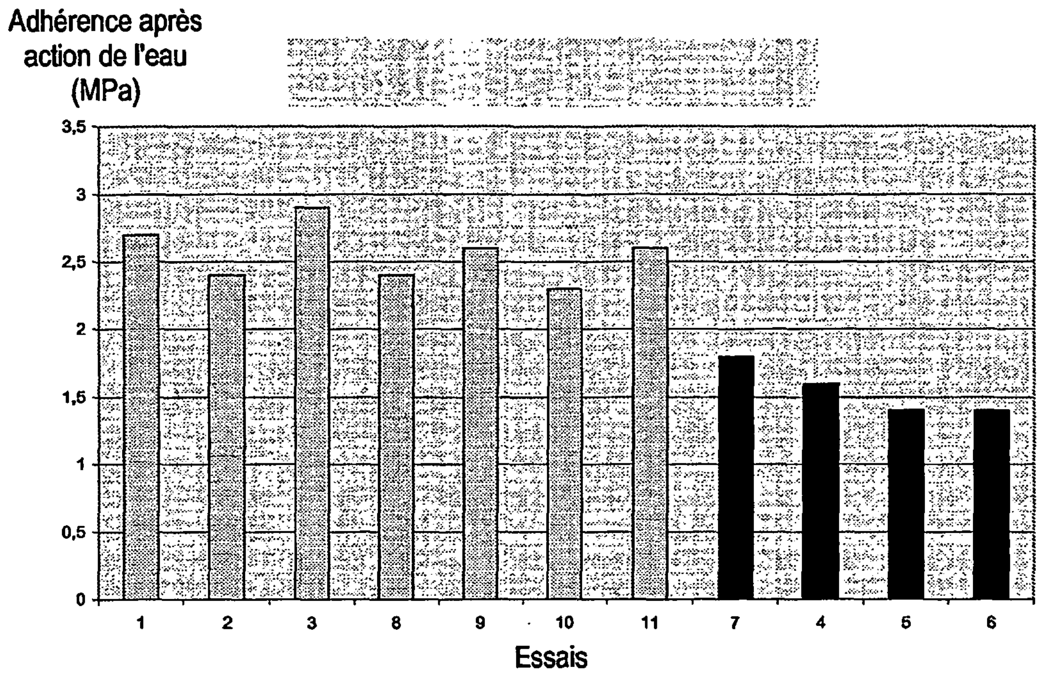
Adhérence après
action de l'eau
(MPa)
3,5
3
2,5
2
1,5
1
0,5
0
1
2
3
8
9
10
11
7
4
5
6
Essais

FIGURE 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4350533 A